# EUROPÄISCHE PATENTANMELDUNG

(11) **EP 1 174 096 A2**
(43) Veröffentlichungstag der Anmeldung: **23.01.2002**
(21) Anmeldenummer: 01117582.5
(22) Anmeldetag: 20.07.2001
(51) Int. Cl.: A61D 19/02

(54) **Abfüllvorrichtung zum Abfüllen von Ebersperma und Verfahren zu ihrem Betrieb**

(30) Priorität: 21.07.2000 DE 20012775 U
(71) Anmelder: Minitüb Abfüll- und Labortechnik GmbH & Co. KG, 84184 Tiefenbach (DE)
(72) Erfinder: Simmet, Christian, Dr., Hauptstrasse 41, 84184 Tiefenbach (DE)
(74) Vertreter: Riederer Freiherr von Paar zu Schönau, Anton

(57) **Zusammenfassung**

Bei einer taktweise arbeitenden Abfüllvorrichtung zum Abfüllen von in Großbehältern (14) angelieferter Flüssigkeit von Ebersperma in Portionsbehälter (13), mit einer Transportstrecke (11) entlang Bearbeitungs-Stationen (18 - 23), die Halter (12) zur Aufnahme der Portionsbehälter (13) mit sich führt und zum Transport der Halter (12) in konstanten Schrittweiten entlang den Stationen mit kurzem Stillstand an den Stationen antreibbar ist, nämlich einer Magazin-Station (18), einer Einfüll-Station (19), einer Verschließ-Station (21) und einer Entnahme-Station (23), die hintereinander entlang der Bahn der Transportstrecke (11) angeordnet sind, wird die Taktfrequenz hauptsächlich durch die maximale Füllgeschwindigkeit der Einfüllstation (19) begrenzt. An der Einfüll-Station (19) ist nicht nur eine einzige an den einzelnen Halter (12) heranführbare Einfülldüse (78) angeordnet, sondern sind mehrere in Schrittweite hintereinander entlang der Transportstrecke angeordnete Einfülldüsen (78) vorhanden, die über eine Leitung (27) mit dem Großbehälter (14) verbunden ist. Für den Abfüllvorgang, der eine gegebene systemgebundene Mindest-Abfülldauer des einzelnen Portionsbehälters (13) bis zu seinem End-Füllungsmaß der Spermaflüssigkeit im Behälter in Ansspruch nimmt, wählt man für die sich intermittierend mit jeweiligen Stillstandszeiten bewegende Transportstrecke (11) vorzugsweise konstante Stillstandszeiten, die einen Brucheil der systemgebundenen Mindest-Abfülldauer der Portionsbehälter (13) betragen, und füllt die einzelnen Portionsbehälter schrittweise in Teilmengen über eine Mehrzahl von Stillstandszeiten hinweg bis zum End-Füllungsmaß ab.

## Beschreibung

Die Erfindung bezieht sich auf eine Abfüllvorrichtung zum Abfüllen von in Großbehältern angeliefertem Ebersperma in Portionsbehälter, mit einer Transportstrecke, insbesondere einem Transportumlauf, entlang Bearbeitungs-Stationen, der Halter wie z. B. Becher zur Aufnahme der Portionsbehälter mit sich führt und zum Transport der Halter in konstanten Schrittweiten entlang den Stationen mit kurzem Stillstand an den Stationen antreibbar ist, nämlich einer Magazin-Station, einer Einfüll-Station, einer Verschließ-Station, eventuell einer Markierstation wie z. B. einer Etikettier- oder Bedruckstation und einer Entnahme-Station, die hintereinander entlang der Bahn des Transportumlaufs angeordnet sind. Eine derartige Abfüllvorrichtung ist aus der DE-OS 38 20 387 bekannt. Sie ist speziell für das Abfüllen von Ebersperma einsetzbar, das in relativ großen Portionsbehältern zum Einsatz kommt. Aus Großbehältern, die einen bis mehrere Liter Spermaflüssigkeit fassen, wird die Flüssigkeit in die Portionsbehälter, insbesondere Kunststofftuben, abgefüllt, die zur Identifizierung des Inhalts zu bedrucken oder zu etikettieren sind.

Die Erfindung bezieht sich auch auf ein Verfahren zum Betrieb der Abfüllvorrichtung.

Die in der DE-OS 38 20 387 beschriebene automatische Abfüllvorrichtung ist hinsichtlich ihrer Technik noch in mancher Hinsicht zu verfeinern, um einen ungestörten schnell und automatisch arbeitenden Ablauf sicherzustellen. Ein Problemkreis betrifft die schnelle Abfüllung abgemessener Mengen der Spermaflüssigkeit, da diese schonend gefördert werden muß und sich bei der Einfüllung in die Portionsbehälter Schaum bilden kann. Während gemäß heutiger Technik der Zeitbedarf für das Verschließen, Bedrucken usw. bei Einsatz entsprechender Mittel sehr kurz gehalten werden kann, läßt sich ein korrektes Abfüllen der jeweils erforderlichen Menge nicht mehr weiter verkürzen. Die Abfüllgeschwindigkeit bestimmt damit den Takt der gesamten Abfüllvorrichtung.

Die Idee, den Takt durch passende Gestaltung der Abfüllstation zu verkürzen, ist bereits in der deutschen Gebrauchsmusterschrift G 90 17 280 angesprochen worden. Dort wird (auf Seite 7) vorgeschlagen, daß an der Einfüll-Station ein Einfüllkopf an einer Schiene entlangtransportiert wird und die an dieser Station stehenden Tuben nacheinander füllt. Eine gemeinsame Bewegung von Einfüllkopf und Halter mit Portionsbehälter erweist sich als aufwendig und störungsanfällig, insbesondere wenn mit Unterdruckansaugung gearbeitet wird und der Einfüllkopf mit einer luftdicht am Halter oder am Portionsbehälter angreifenden Glocke arbeitet.

Demgegenüber soll durch die Erfindung durch entsprechende Gestaltung der Abfüllstation eine Erhöhung des Arbeitstakts der Abfüllvorrichtung ermöglicht werden. Dies wird gemäß der Erfindung dadurch erreicht, daß, ausgehend von einer Abfüllvorrichtung der eingangs genannten Art, die Einfüllstation mehrere, nämlich wenigstens zwei in Schrittweite hintereinander entlang dem Transportumlauf angeordnete Einfülldüsen aufweist. Die Steuerung kann dann so erfolgen, daß - bei beispielsweise zwei Einfülldüsen - die erste Düse den Portionsbehälter zur Hälfte füllt und die zweite Einfülldüse beim nächsten Takt den Portionsbehälter restlich füllt, während die erste Einfülldüse schon wieder in den nächsten Portionsbehälter einfüllt. Sind drei Einfülldüsen vorhanden, so kann jede Düse ein Drittel der Gesamtmenge einfüllen. Die Taktzeit kann dadurch bei konstanter Einfüllgeschwindigkeit auf einen entsprechenden Bruchteil der Gesamteinfüllzeit des Portionsbehälters verkürzt werden. Im Betrieb der Vorrichtung wird die Spermaflüssigkeit mit einer gegebenen systemgebundenen Mindest-Abfülldauer des einzelnen Portionsbehälters bis zu einem End-Füllungsmaß der Spermaflüssigkeit im Behälter eingefüllt, wobei man für die sich intermittierend mit jeweiligen Stillstandszeiten bewegende Transportstrecke konstante Stillstandszeiten wählt, die nur einen Teil der systemgebundenen Mindest-Abfülldauer der Portionsbehälter betragen, und die einzelnen Portionsbehälter schrittweise in Teilmengen über eine Mehrzahl von Stillstandszeiten hinweg bis zum End-Füllungsmaß abfüllt.

Es ist auch möglich, daß beispielsweise die erste Einfülldüse den Portionsbehälter zum gegebenen Bruchteil mit Spermaflüssigkeit und die zweite Einfülldüse das Restvolumen mit einem Verdünnungsmittel, das auch als Trägermedium für zusätzliche Stoffe, die für die Spermakonservierung oder erfolgreiche Insemination bedeutsam sein können, dienen kann, füllt; und daß, wenn für die von den verschiedenen Einfülldüsen gelieferten Flüssigkeiten unterschiedliche Füllzeiten vorzusehen sind, die einzelnen Einfülldüsen innerhalb der Stillstandszeit nur während einer Teilzeit füllen. Auf einer der Füllstationen kann auch anstelle von Flüssigkeit Pulver oder können Kapseln dosiert bzw. abgefüllt werden. Diese diversen Möglichkeiten ergeben sich aus den in den Unteransprüchen beanspruchten Einzelheiten.

Weitere Einzelheiten, Vorteile und Weiterbildungen der Erfindung ergeben sich aus der folgenden Beschreibung eines bevorzugten Ausführungsbeispiels unter Bezugnahme auf die skizzenhaften Figuren der Zeichnung. Es zeigen:
- Fig. 1: eine schematische Vorderansicht einer Erfindungsgemäßen Abfüllvorrichtung;
- Fig. 2: eine schematische Darstellung von auf eine Magazin-Station folgenden Stationen, nämlich einer Einfüll-Station und einer Verschließ-Station;
- Fig. 3: einen Querschnitt durch einen Becher mit einer eingesetzten Tube in der Einfüll-Station nach Fig. 2.

Einzelheiten der dargestellten Ausführungsformen können in den verschiedenen Figuren auch mal voneinander abweichen.

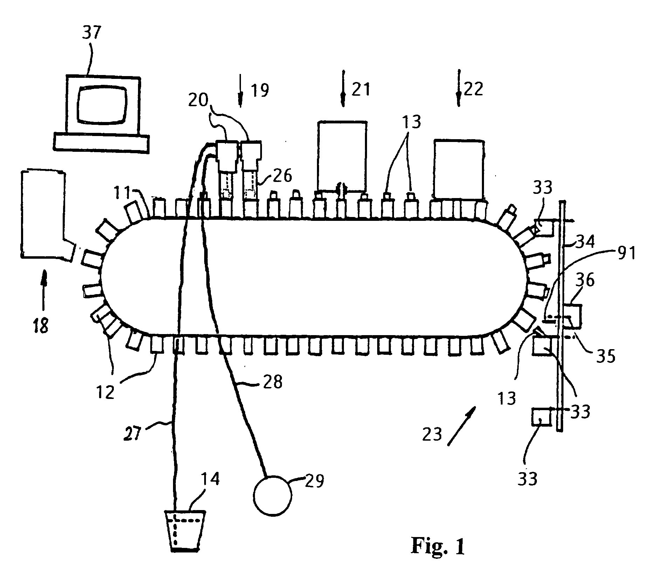

Fig. 1 zeigt einen Transportumlauf in Form einer intermittierend umlaufenden Transportkette (11), auf der in gleichmäßigen Abständen Halter in Form von Bechern (12) montiert sind, die als vorübergehende Aufnahmen für Portionsbehälter, nämlich für zunächst offene Tuben (13) dienen, welche mit Eberspermaflüssigkeit zu füllen sind. Das Ebersperma wurde in einem Großbehälter (14), der beispielsweise einen bis mehrere Liter faßt, angeliefert.

Entlang der Transportkette sind fünf Arbeitsstationen angeordnet, nämlich eine Magazin-Station (18), eine Einfüll-Station (19) mit zwei Einfüllköpfen (20), eine Verschließ-Station (21), eine Markier-Station (22) und eine Entnahme-Station (23). Die Stationen (18) bis (21) sind jeweils in einem geradzahligen Vielfachen des Abstands der Becher (12) auf der Transportkette (11) voneinander angeordnet. Von der Entnahmestation (23) zur Magazin-Station (18) laufen die Becher (12) leer. In der Magazin-Station (18) wird ein Portionsbehälter, nämlich eine noch offene Kunststofftube (13), in den an dieser Station bei der intermittierenden Bewegung der Transportkette (11) verharrenden Becher (12) eingegeben. Dieser Becher gelangt bei den nächsten Schritten zur Einfüllstation (19) mit beim dargestellten Beispiel zwei Einfüllköpfen (20), an denen sich jeweils über dem Becher eine Glocke (26) herabsenkt; von den Einfüllköpfen (20) besteht - bei der dargestellten Ausführung für beide Köpfe gemeinsam - über einen ersten Schlauch (27) eine Verbindung zum Großbehälter (14) und über einen zweiten Schlauch (28) eine Verbindung zu einer Unterdruckquelle (29), also einer Saugpumpe oder dergleichen. Über den Schlauch (28), der ausreichend steif sein muß, um durch den atmosphärischen Druck nicht zusammengedrückt zu werden, wird ein Sog an den Innenraum der Glocke (26) im jeweiligen Einfüllkopf (20) der Einfüll-Station (19) angelegt, und mit Hilfe dieses Sogs wird über den Schlauch (27) eine vorgegebene Menge Spermaflüssigkeit in noch genauer beschriebener Weise aus dem Großbehälter (14) angesaugt und durch deren offene Oberseite in die Tube (13) eingefüllt. Die Glocken (26) ziehen sich hierauf wieder zurück und die Transportkette (11) führt den nächsten Schritt aus, bei dem von zwei aufeinanderfolgenden Tuben die erste Tube in die Verschließ-Station (21) gerät und die zweite Tube in den Bereich des zweiten Einfüllkopfs (20) gerät. In der Verschließ-Station (21) wird der obere Rand der Tube (13) zusammengedrückt und zusammengeschweißt. Solche Tubenverschweißvorrichtungen sind kommerziell erhältlich. Die so verschlossene Tube wird beim nächsten Schritt weitertransportiert zur Markier-Station (22), die eine Etikettier-Station oder eine Bedruck-Station sein kann, wobei es sich ebenfalls um eine kommerziell erhältliche Einrichtung mit einem Etikettenzulauf bzw. einem Bedruckkopf handelt.

Die Abfüllung des Eberspermas oder der anderen Flüssigkeiten, die an den jeweiligen Einfüllstationen dosiert werden, kann auch dadurch erfolgen, daß ein geringer Überdruck auf den Großbehälter angelegt wird und dadurch die Flüssigkeit in den Portionsbehälter gedrückt wird, oder dadurch, daß der Großbehälter über dem Portionsbehälter positioniert wird und die Flüssigkeit in den Portionsbehälter durch Schwerkraft fließt. Auch ist es möglich, die Flüssigkeiten durch eine Schlauchpumpe (Peristaltikpumpe) vom Großbehälter in den Portionsbehälter zu fördern.

Die geschlossene und etikettierte oder bedruckte Tube (13) kommt nun zur Entnahmestation (23), wo sie zum Beispiel aufgrund der Schwerkraft, bei komplexeren Anlagen mit Hilfe eines Zangengriffs oder gemäß den Figuren durch Blaswirkung den betreffenden Becher (12) verläßt und in einen Sammelbehälter (33) transportiert wird. Bei der dargestellten Ausführungsform sind mehrere Sammelbehälter (33) vorhanden, die jeweils die Tuben mit Spermaflüssigkeit einer gegebenen Kategorie, beispielsweise jeweils eines bestimmten Ebers, sammeln. Die Sammelbehälter (33) sitzen jeweils gelenkig und durch Schwerkraft in einer aufrechten Lage gehalten entlang dem Umfang einer Drehscheibe (34), die um eine horizontale Achse (35) verdrehbar ist. In der Darstellung nach Fig. 1 ist nur der schmale Rand der Scheibe zu sehen, die in einer zur Zeichenebene senkrechten Ebene kreisförmig gestaltet ist. Dem Verstellantrieb der Drehscheibe (34) dient ein Stellmotor (36). Der Steuerung der ganzen Anlage dient eine Datenverarbeitungsvorrichtung 37. Die Anordnung hat insgesamt einen aus der DE-OS 38 20 387 oder der DE-GM 295 08 934 bekannten Aufbau.

Bei der in Fig. 1 dargestellten Anordnung haben die Stationen (19) bis (23) für die von ihnen zu verrichtende Tätigkeit eine gleiche Zeitspanne, nämlich die Stillstandzeitspanne der Transportkette (11), zur Verfügung. Benötigen einzelne Vorgänge eine längere Zeit, so entstehen an den anderen Stationen Wartezeiten. Eine längere Zeit könnte insbesondere an der Einfüll-Station (19) in Frage kommen, da der Füllvorgang durch die Fließeigenschaften und die Belastbarkeit des Abfüllmediums sowie durch eventuelle Schaumbildung nicht beliebig beschleunigt werden kann. Um nicht durch den langsameren Einfüll-Takt die Arbeitsgeschwindigkeit der gesamten Abfüllanlage zu begrenzen, sind an der Einfüll-Station (19) die beiden Einfüllköpfe (20) vorhanden, von denen jeder die einzelne Tube (13) nur halb füllt, nämlich der erste Einfüllkopf (20) mit der ersten halben Portion und der zweite Einfüllkopf (20) mit der zweiten halben Portion.

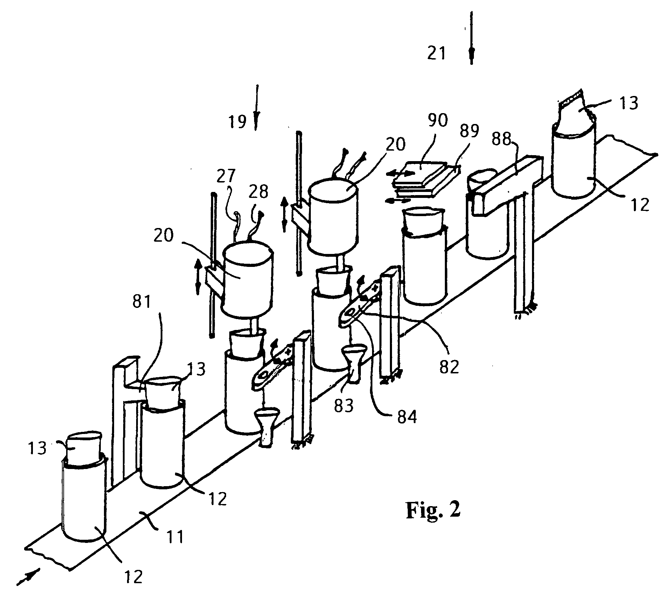

Fig. 2 zeigt im Verlauf der Transportkette (11) die Einfüll-Station (19) und die Verschließ-Station (20) mehr im einzelnen.

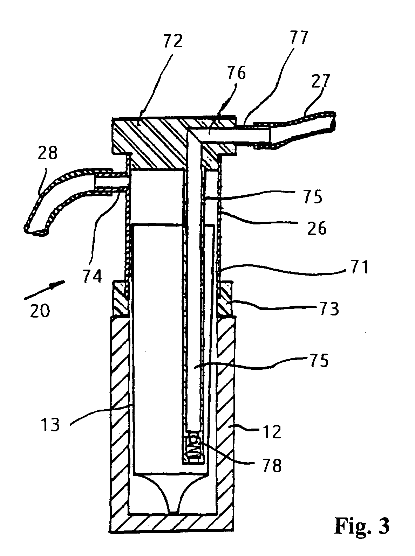

Fig.n 2 und 3 zeigen für jeden Einfüllkopf (20) die Glocke (26), die vertikal beweglich ist und in der Darstellung nach Fig. 3 auf einen der Becher (12), in den eine offene Tube (13) eingebracht ist, aufgesetzt ist. Die Glocke (26) besteht aus einem zylindrischen Gehäuse (71), das oben durch einen Gummistopfen (72) verschlossen ist und entlang seinem unteren Rand einen elastischen Dichtungsring (73) aufweist. In das zylindrische Gehäuse (71) mündet ein Saugnippel (74), an den der zur Unterdruckquelle (29) führende Schlauch (28) angeschlossen ist. An der Unterseite des Gummistopfens (72) steht ein Abfüllrohr (75) vor, das über einen Kanal (76) im Gummistopfen mit einem Anschlußstutzen (77) für den Schlauch (27) kommuniziert, der zum Großbehälter (14) führt. An diese Schläuche 27 und 28 ist auch der andere der beiden Einfüllköpfe (20) angeschlossen. Das Abfüllrohr (75) jedes Einfüllkopfs ist so lang, daß es bei auf den oberen Rand des Bechers (12) aufgesetztem Dichtungsring (73) bis in den Bereich des Bodens der Tube (13) reicht. Am unteren Ende des Abfüllrohrs (75) befindet sich in diesem eine Einfülldüse (78) mit einem Rückschlagventil, das das untere Rohrende verschließt, wenn nicht im Bereich vor der Rohrmündung relativ zum Rohrinneren ein Unterdruck herrscht.

Beim Anlegen des Unterdrucks über den Schlauch (28) wird über den Schlauch (27) Spermaflüssigkeit angesaugt, die über die Einfülldüse (78) aus dem unteren Ende des Abfüllrohrs (75) in die Tube (13) fließt. Die Abgabe unter dem Flüssigkeitsspiegel trägt dazu bei, daß die Spermaflüssigkeit kaum zur Schaumbildung während der Abfüllung neigt. Aufsteigender Schaum hätte zur Folge, daß die Tubenwand auch in ihrem oberen Bereich naß wird, was das anschließende Verschweißen in der Verschließ-Station (21) erheblich erschwert. Zum Ansaugen einer Portion der Spermaflüssigkeit wird über den Schlauch (27) eine Luftmenge gegebenen Volumens abgesaugt, wozu die Unterdruckquelle (29) elektrisch angesteuert wird. Alternativ kann eine (nicht dargestellte) Lichtschranke auf die Füllhöhe in der Tube (13) ansprechen.

Gemäß Fig. 2 befindet sich vor der Einfüll-Station (19) noch eine Kontrolleinrichtung in Form eines Mikroschalters (81), der in Abhängigkeit davon anspricht, ob sich im Becher (12) eine Tube (13) befindet oder nicht. Bei fehlender Tube (13) werden die Vertikalbewegung der Glocken (26) und die Steuerung des Anlegens des Unterdrucks so beeinflußt, daß dieses Anlegen in dieser Phase unterbleibt und nicht die Spermaflüssigkeit unmittelbar in den Becher (12) gesaugt wird. Ferner bewirkt das Nicht-Ansprechen des Mikroschalters (81) das Vorschwenken eines neben der Transportkette (11) angeordneten Tropfenfängers (82), der sich während der gesperrten Sekunden unter dem unteren Ende des Abfüllrohrs (75) befindet, das seinerseits durch das Rückschlagventil der Einfülldüse (78) abgeschlossen ist. Spermaflüssigkeit, die außen am Rohr herunterläuft oder sich noch am Mündungsbereich des Rohrs befindet und als Tropfen löst, wird vom Tropfenfänger (82) aufgefangen, der anschließend wieder aus der vertikalen Bewegungsbahn des Abfüllrohrs (75) herausgeschwenkt wird und über einer Tropfenflasche (83) zum Stillstand kommt, wo aufgrund einer Steuerung, beispielsweise durch einen Nocken, eine Auffangmulde (84), in der der Tropfen sich befindet, unten geöffnet oder seitwärts ausgekippt wird. Alternativ könnte die Mulde (84) auch abgesaugt werden.

Fig. 2 zeigt weiterhin die Verschließ-Station (21), in der die Tuben (13) durch Ultraschallschweißung verschlossen werden. Zwischen einem Amboß (88) und einer Halte- oder Preßbacke (89) wird der obere Rand der gefüllten Tube (13) zunächst flachgedrückt und dann mit Hilfe einer Sonotrode (90) in an sich bekannter Weise zusammengeschweißt.

Die geschlossenen Tuben laufen dann weiter über die Markier-Station (22), sofern sie an dieser Stelle vorhanden ist, zur Entnahme-Station (23). Wie Fig. 1 zeigt, besteht die Entnahmestation im wesentlichen aus einer Blasdüse (91), die in den mit der Tube (13) bestückten Becher (12) einen Luftstoß bläst, der zu einer Luftansammlung und Überdruckbildung am geschlossenen Grunde des Bechers (12), also hinter der Tube (13), führt. Dieses Druckkissen schleudert die Tube (13) aus dem Becher (12) heraus und in einen der Sammelbehälter (33), der an der betreffenden Stelle positioniert worden ist.

Die Markier-Station (22) muß nicht notwendigerweise zwischen der Verschließ-Station (21) und der Entnahme-Station (23) angeordnet sein, die Etiketten können ebenso an anderer Stelle, beispielsweise im Verlauf der Entnahme an der Magazin-Station (18), aufgebracht werden, und es ist auch möglich, die Tuben nicht mit bedruckten Etiketten zu bekleben, sondern unmittelbar zu bedrucken, beispielsweise während ihres Transports mit Hilfe eines Tintenstrahldruckers. Diese Vorgänge nehmen für sich nur kurze Zeit in Anspruch, die eine hohe Taktfrequenz zulassen.

Werden an den verschiedenen Stationen noch schnellere Komponenten verwendet, so kann die Einfüllung auch auf drei Einfüllköpfe verteilt werden, die im Schrittabstand hintereinander an der Einfüll-Station (19) angeordnet sind und jeweils ein Drittel der Portionsmenge einfüllen. Schließlich können auch vier oder mehr Einfüllköpfe verwendet werden. Bei den auf den ersten Einfüllkopf folgenden Einfüllköpfen können die Abfüllrohre (75) entsprechend den Aufgaben des entsprechenden Abfüllkopfs auch kürzer sein als bei den vorhergehenden.

Es wird gelegentlich auch gefordert, die Tuben (13) zu einem Prozentsatz mit Spermaflüssigkeit und im übrigen mit einem Verdünnungsmittel oder Nachsspülmittel zu füllen. Mit der beschriebenen Abfüllvorrichtung kann dies so gehandhabt werden, daß beispielsweise bei zwei Einfüllköpfen (20) der erste Einfüllkopf die Spermaflüssigkeit und der zweite Abfüllkopf das Verdünnungsmittel einfüllt; oder bei drei Einfüllköpfen (20), daß die ersten beiden Einfüllköpfe die Spermaflüssigkeit und der dritte Einfüllkopf das Verdünnungsmittel liefert.

In Fällen wie z.B. der Einbeziehung eines Nachspülmittles, mit dem nach der Spermaapplikation nachgespült werden soll, in die Tube 13 oder in Fällen, in denen die Mischung der Substanzen erst unmittlebar vor der Applikation erfolgen soll, wird zwischen den Einfülldüsen bzw. zwischen den Abfüllschritten der Substanzen mit Hilfe einer Zwischenverschlußstation über dem Füllpegel der zuerst eingefülten Substanz eine Trennung oder Sperre geschaffen, die später von außen wieder zu öffnen ist, beispielsweise in Form eines Zwischenbodens, einer Zwischenverschweißung oder einer Zwischenklemmung. Es eignen sich hierfür beispielsweise eine eingeklebte Trennhaut, die durch Druckeinwirkung von außen und somit durch einseitigen Druck zum Aufplatzen zu bringen ist, oder eine von außen angelegte und zu lösende Klammer.

Die vorliegende Beschreibung behandelt die Situation, daß einzelne Tuben von Station zu Station transportiert werden. Bei großen Anlagen können natürlich auch gleichzeitig eine Vielzahl von Tuben parallel behandelt werden und in entsprechend größeren Schritten weitertransport werden. Nach dem Stand der Technik werden dann beispielsweise gleichzeitig fünf Tuben durch parallel arbeitende Einfüllköpfe abgefüllt, anschließend durch fünf parallel arbeitende Verschließvorrichtungen gleichzeitig verschlossen usw.; auf diesem Beispiel aufbauend, sieht dann die erfindungsgemäße Abfüllvorrichtung so aus, daß an der Einfüll-Station zehn oder fünfzehn Einfüllköpfe tätig sind, von denen die ersten fünf gleichzeitig und parallel die erste Teilportion, die nächsten fünf gleichzeitig und parallel die zweite Teilportion usw. in jeweils fünf Tuben abfüllen.

## Patentansprüche

1. Abfüllvorrichtung zum Abfüllen von in Großbehältern (14) angelieferter Flüssigkeit von Ebersperma in Portionsbehälter (13), mit einer Transportstrecke (11) entlang Bearbeitungs-Stationen (18 - 23), die Halter (12) zur Aufnahme der Portionsbehälter (13) mit sich führt und zum Transport der Halter (12) in konstanten Schrittweiten entlang den Stationen mit kurzem Stillstand an den Stationen antreibbar ist, nämlich einer Magazin-Station (18), einer Einfüll-Station (19), einer Verschließ-Station (21) und einer Entnahme-Station (23), die hintereinander entlang der Bahn der Transportstrecke (11) angeordnet sind, wobei an der Einfüll-Station (19) wenigstens eine an den einzelnen Halter (12) heranführbare Einfülldüse (78) angeordnet ist, die über eine Leitung (27) mit dem Großbehälter (14) verbindbar ist, **dadurch gekennzeichnet, daß** in der Einfüll-Station (19) mehrere in Schrittweite hintereinander entlang der Transportstrecke angeordnete Einfülldüsen (78) vorhanden sind.

2. Abfüllvorrichtung nach Anspruch 1, **dadurch gekennzeichnet, daß** die Einfülldüsen (78) über jeweils eigene Ansteuerungen verfügen.

3. Abfüllvorrichtung nach Anspruch 1 oder 2, **dadurch gekennzeichnet, daß** die Einfülldüsen (78) zumindest gruppenweise eigene Leitungen zum Großbehälter (14) bzw. zu sonstigen Behältern aufweisen.

4. Abfüllvorrichtung nach einem der Ansprüche 1 bis 3, **dadurch gekennzeichnet, daß**, bezogen auf die systemgebundene Abfülldauer eines Portionsbehälters (13), die Stillstandszeit an den Einfülldüsen (78) der Einfüllstation (19) auf eine Dauer gesteuert ist, die der Abfülldauer geteilt durch die Zahl der hintereinander angeordneten Einfülldüsen gleich oder geringfügig länger als sie ist.

5. Abfüllvorrichtung nach einem der Ansprüche 1 bis 4, **dadurch gekennzeichnet, daß** als eine der Bearbeitungsstationen, entlang denen die Transportstrecke (11) verläuft, auch eine Markier-Station (22) vorhanden ist.

6. Abfüllvorrichtung nach einem der Ansprüche 1 bis 5, **dadurch gekennzeichnet, daß** die Transportstrecke eine Strecke eines Transportumlaufs ist.

7. Verfahren zum Betrieb der Abfüllvorrichtung nach einem der Ansprüche 1 bis 5, mit einer gegebenen systemgebundenen Mindest-Abfülldauer des einzelnen Portionsbehälters (13) bis zu seinem End-Füllungsmaß der Spermaflüssigkeit im Behälter, **dadurch gekennzeichnet, daß** man für die sich intermittierend mit jeweiligen Stillstandszeiten bewegende Transportstrecke (11) vorzgsweise konstante Stillstandszeiten wählt, die einen Teil der systemgebundenen Mindest-Abfülldauer der Portionsbehälter (13) betragen, und die einzelnen Portionsbehälter schrittweise in Teilmengen über eine Mehrzahl von Stillstandszeiten hinweg bis zum End-Füllungsmaß abfüllt.

8. Verfahren nach Anspruch 7, **dadurch gekennzeichnet, daß** man parallel jeweils eine Mehrzahl von Portionsbehältern (13) mit je Stillstandszeit einer jeweiligen Teilmenge abfüllt.

9. Verfahren nach Anspruch 7 oder 8, **dadurch gekennzeichnet, daß** man außer der Spermaflüssigkeit während wenigstens einer der Stillstandszeiten in den oder die Portionsbehälter (13) auch Zusatzsubstanzen füllt.

10. Verfahren nach Anspruch 9, **dadurch gekennzeichnet, daß** man zwischen zwei Abfüllschritten unterschiedlicher Substanzen im Portionsbehälter eine die abgefüllten Substanzen separierende Sperre bildet.
